# EUROPEAN PATENT APPLICATION

(11) **EP 3 124 858 A1**
(43) Date of publication of application: **01.02.2017**
(21) Application number: 16180456.2
(22) Date of filing: 20.07.2016
(51) Int. Cl.: F21V 8/00

(54) **DISPLAY APPARATUS**

(30) Priority: 28.07.2015 KR 20150106250
(71) Applicant: Samsung Electronics Co., Ltd., Suwon-si, Gyeonggi-do 16677 (KR)
(72) Inventor: Jeon, Keun-Bae, Gyeonggi-do (KR); Park, Kyung Soo, Gyeonggi-do (KR); Yang, Dae Kuen, Gyeonggi-do (KR); Lee, Jeong Ho, Gyeonggi-do (KR)
(74) Representative: Appleyard Lees IP LLP

(57) **Abstract**

A display apparatus includes a display panel, a light guide plate disposed behind the display panel, a light source disposed to face at least one side surface of the light guide plate, and at least one guide member disposed between the at least one side surface of the light guide plate and the light source, and configured to support at least one of a front part of the at least one side surface of the light guide plate and a back part of the at least one side surface of the light guide plate.

## Description

### BACKGROUND

### 1. Field

Apparatuses consistent with exemplary embodiments of the present disclosure relate to a backlight apparatus having a backlight unit for supplying light to a display panel.

### 2. Description of the Related Art

In general, a display apparatus is equipment for displaying an image on a screen. Examples of the display apparatus include a monitor, a television, etc.

The display apparatus includes a display panel implemented as a liquid crystal panel to display an image on a screen, and a backlight which supplies light to the display panel.

The backlight includes an edge type backlight having a light guide plate disposed behind the display panel, and a plurality of light sources arranged along both sides of the light guide plate to emit light.

Recently, a backlight including, as a light source unit, a substrate and Light Emitting Diodes (LEDs) arranged on the substrate has been developed.

### SUMMARY

One or more exemplary embodiments provide a display apparatus capable of reducing the generation of a bright area and a dark area.

In accordance with an aspect of an exemplary embodiment, there is provided a display apparatus including: a display panel, a light guide plate disposed behind the display panel, at least one light source disposed to face at least one side surface of the light guide plate, and at least one guide member disposed between the at least on side surface of the light guide plate and the at least one light source, and configured to support at least one of a front part of the at least one side surface of the light guide plate and a back part of the at least one side surface of the light guide plate.

The at least one light source may include a substrate, and a plurality of light emitting diodes (LEDs) arranged on the substrate to face the at least one side surface of the light guide plate, and the guide member restrictively supports the LEDs and the at least one of the front part of the at least one side surface of the light guide plate and the back part of the at least one side surface of the light guide plate.

The display apparatus may further include a middle mold configured to support the display panel, and a bottom chassis configured to accommodate the light guide plate therein, wherein the guide member is disposed in one of the middle mold and the bottom chassis.

The at least one guide member may be integrated into the middle mold and protrude from the middle mold.

The at least one guide member may be formed by modifying a part of the bottom chassis.

The at least one guide member may be formed as a separate component relative to the bottom chassis, and matingly engaged in the bottom chassis.

The at least one guide member may include an installation part extending parallel to the bottom chassis, and a guide part protruding from the installation part and supporting the at least one side surface of the light guide plate.

The display apparatus may further include a diffusion member disposed between the at least one guide member and the at least one side surface of the light guide plate, and configured to diffuse light.

The display apparatus may further include a transparent member disposed between the at least one guide member and the diffusion member.

In accordance with an aspect of another exemplary embodiment, there is provided a display apparatus including a display panel, a light guide plate disposed behind the display panel, a middle mold configured to support edges of the display panel, a bottom chassis configured to accommodate the light guide plate, a plurality of LEDs disposed to face at least one side surface of the light guide plate, a first guide member disposed in the middle mold between the at least one side surface of the light guide plate and the plurality of LEDs, the first guide member may be configured to support a front part of the at least one side surface of the light guide plate, and a second guide member disposed in the bottom chassis between the at least one side surface of the light guide plate and the plurality of LEDs, the second guide member may be configured to support a back part of the at least one side surface of the light guide plate, wherein the first guide member is spaced from the second guide member, and faces the second guide member.

The display apparatus may further include a diffusion member disposed between the first guide member and the second guide member and the at least one side surface of the light guide plate.

The display apparatus may further include a transparent member disposed between the first guide member and the second guide member and the diffusion member.

The second guide member may be formed as a separate component relative to the bottom chassis, and may be matingly engaged in the bottom chassis.

The plurality of LEDs may be aligned to face an upper side surface and a lower side surface of the light guide plate, and a pair of first guide members and a pair of second guide members may be provided to support the upper side surface and the lower side surface of the light guide plate.

### BRIEF DESCRIPTION OF THE DRAWINGS

The above and/or other aspects will become apparent and more readily appreciated from the following description of exemplary embodiments, taken in conjunction with the accompanying drawings of which:
FIG. 1 is a perspective view of a display apparatus according to a first exemplary embodiment;
FIG. 2 is an exploded perspective view of a display module applied to a display apparatus according to the first exemplary embodiment;
FIG. 3 is a cross-sectional view of a display module applied to a display apparatus according to the first exemplary embodiment;
FIG. 4 is a cross-sectional view of a display module applied to a display apparatus according to a second exemplary embodiment;
FIG. 5 is a cross-sectional view of a display module applied to a display apparatus according to a third exemplary embodiment;
FIG. 6 is a cross-sectional view of a display module applied to a display apparatus according to a fourth exemplary embodiment;
FIG. 7 is a cross-sectional view of a display module applied to a display apparatus according to a fifth exemplary embodiment; and
FIG. 8 is a cross-sectional view of a display module applied to a display apparatus according to a sixth exemplary embodiment.

### DETAILED DESCRIPTION

Hereinafter, a display apparatus according to exemplary embodiments will be described in detail with reference to the accompanying drawings.

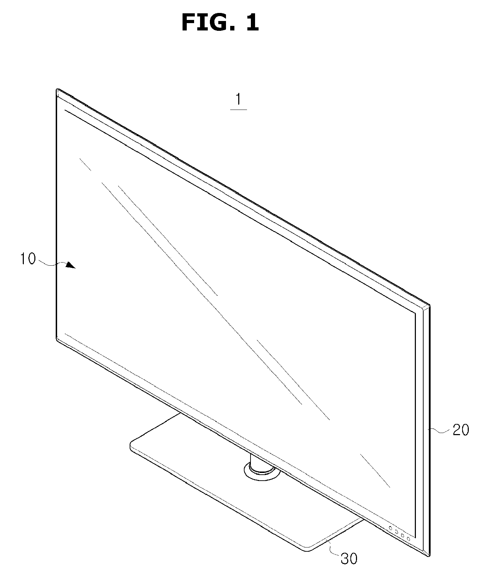

As shown in FIG. 1, a display apparatus 1 according to an exemplary embodiment may include a display module 10 to display images, and a case 20 to accommodate the display module 10, the case 20 forming an outer appearance of the display apparatus 1. The rear part of the case 20 may be connected to a stand 30 that enables the display apparatus 1 to stand on a horizontal plane.

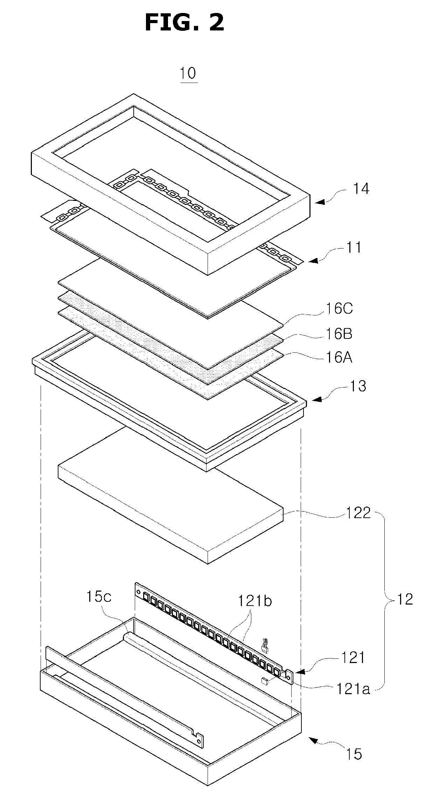

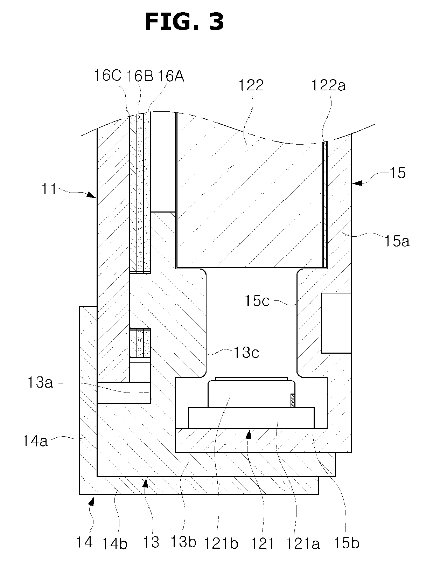

The display module 10 may include, as shown in FIGS. 2 and 3, a display panel 11 configured to display images, a backlight 12 configured to generate light and to supply the light to the display panel 11, a middle mold 13 in which the display panel 11 is rested and which is configured to support the edges of the display panel 11, a top chassis 14 coupled with the front part of the middle mold 13 and configured to maintain the display panel 11 at its state installed in the middle mold 13, and a bottom chassis 15 configured to accommodate the backlight 12 and coupled with the rear part of the middle mold 13.

The display panel 11 may be a liquid crystal panel in the shape of a quadrangular flat plate but is not limited thereto.

The backlight 12 may include a light source 121 to generate light, and a light guide plate 122 to guide light generated by the light source 121 to the display panel 11.

The light source 121 may include a substrate 121a, and a plurality of light emitting diodes (LEDs) 121b arranged on the substrate 121a.

The light guide plate 122 may be made of a transparent material in order to transmit and guide light, formed in the shape of a quadrangular flat plate to correspond to the display panel 11, and disposed behind the display panel 11. On the rear surface of the light guide plate 122, a reflective sheet 122a may be disposed to reflect light in a front direction.

In the current exemplary embodiment, two light sources 121 may be provided. Accordingly, two substrates 121a may be respectively provided in the light sources 121. The substrates 121a may extend in a horizontal direction to correspond to the upper and lower side surfaces of the light guide plate 122, and the LEDs 121b of the two light sources 121 may be arranged in a line on the substrates 121a to face the upper and lower side surfaces of the light guide plate 122. Accordingly, light generated by the LEDs 121a may be incident to the inside of the light guide plate 122 through the upper and lower side surfaces of the light guide plate 122.

The middle mold 13 may include a panel resting part 13a on which the display panel 11 is rested in the front direction, and a bottom coupling part 13b extending from the panel resting part 13a in a back direction and coupled with the bottom chassis 15.

The top chassis 14 may include a bezel part 14a to support the front edge parts of the display panel 11, and a top side part 14b extending from the bezel part 14a in the back direction and coupled with the middle mold 13.

The bottom chassis 15 may include a bottom rear part 15a which is formed in the shape of a quadrangular flat plate and on which the light guide plate 122 is rested, and a bottom side part 15b extending from the borders of the bottom rear part 15a in the front direction and coupled with the middle mold 13. On the rear surface of the bottom rear part 15a, various kinds of substrates for controlling operations of the display apparatus 1 may be mounted.

Also, the display apparatus 1 may include a plurality of optical sheets 16A, 16B, and 16C disposed between the display panel 11 and the light guide plate 122, and configured to improve the properties of light. The plurality of optical sheets 16A, 16B, and 16C may include an optical sheet 16A configured to diffuse light exiting the front surface of the light guide plate 122, a prism sheet 16B disposed in front of the diffusion sheet 16A and configured to focus light diffused by the diffusion sheet 16A and transfer the focused light in a direction that is vertical to the front surface, and a protective sheet 16C disposed in front of the prism sheet 16B and configured to protect the prism sheet 16B. In the current exemplary embodiment, the optical sheets 16A, 16B, and 16C may be supported by the middle mold 13.

Also, the display apparatus 1 may include a plurality of guide members 13c and 15c configured to support the upper, lower, left, and right side surfaces of the light guide plate 122. The guide members 13c and 15c may be disposed between the light source 121 and at least one side surface of the light guide plate 122, and support the side surface of the light guide plate 122.

In the current exemplary embodiment, the guide members 13c and 15c may include a first guide member 13c provided in the middle mold 13, and a second guide member 15c provided in the bottom chassis 15. The first guide member 13c and the second guide member 15c may extend in the width direction of the light guide plate 122, and may be formed in the shape of a quadrangular bar. In the current exemplary embodiment, the first guide member 13c may be integrated into the middle mold 13 when the middle mold 13 is injection molded with resin, and the second guide member 15c may be integrated into the bottom rear part 15a by bending a part of the bottom rear part 15a when a metal plate is manufactured by press-forming or the like, but embodiments are not limited thereto.

The first guide member 13c may restrictively support a front part of the side surface of the light guide plate 122, and the second guide member 15c may restrictively support a back part of the side surface of the light guide plate 122. Also, the first guide member 13c and the second guide member 15c may be spaced a predetermined distance from each other. Accordingly, light generated by the LEDs 121b may be transferred to the side surface of the light guide plate 122 via a space between the first guide member 13c and the second guide member 15c, and then incident to the inside of the light guide plate 122.

In FIG. 3, a state in which the light source 121 is disposed to face the lower side surface of the light guide plate 122, and the guide members 13c and 15c support the lower side surface of the light guide plate 122 is shown. However, since two light sources 121 are provided to face the upper and lower side surfaces of the light guide plate 122, as described above, the upper side surface of the light guide plate 122 may also be supported by the guide members 13c and 15c. That is, two first guide members 13c may be respectively formed in the upper and lower parts of the middle mold 13, and two second guide members 15c may be respectively formed in the upper and lower parts of the bottom chassis 15 in correspondence to the first guide members 13c.

As such, if the upper and lower side parts of the light guide plate 122 are supported by the guide members 13c and 15c, gaps between the light sources 121 and the light guide plate 122 can be maintained constant by the guide members 13c and 15c, and deformation of the light guide plate 122 due to thermal expansion can be suppressed to some degree.

Also, since light generated by the LEDs 121b can be directly transferred to the side surfaces of the light guide plate 122 through the spaces between the first guide members 13c and the second guide members 15c, the first and second guide members 13c and 15c may function to prevent a bright area (that is, a relatively brighter area than its peripheral area) or a dark area (that is, a relatively darker area than its peripheral area) from being generated in the light guide plate 122.

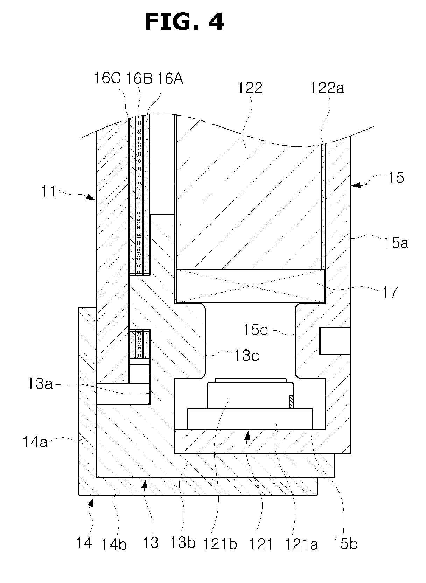

FIG. 4 shows a sectional view of a display module according to a second exemplary embodiment.

Referring to FIG. 4, a display module 10 may include a display panel 11, a light guide plate 122, a middle mold 13, a bottom chassis 15, and a top chassis 14, which have the same shapes as the corresponding components described above. Also, a first guide member 13c may be provided in the middle mold 13, and a second guide member 15c may be provided in the bottom chassis 15, wherein the heights in up-down direction of the first and second guide members 13c and 15c may be lower than those of the first and second guide members 13c and 15c of the first exemplary embodiment described above. Also, between the first and second guide members 13c and 15c and a side surface (that is, the lower side surface of the light guide plate 122 in FIG. 4) of the light guide plate 122, a diffusion member 17 for diffusing light may be disposed.

Accordingly, the side surface of the light guide plate 122 may be supported indirectly by the diffusion member 17.

The diffusion member 17 may be made of a white translucent material to diffuse light. Accordingly, light generated by the LEDs 121b may be transferred to the diffusion member 17 through the space between the first guide member 13c and the second guide member 15c, and the light transferred to the diffusion member 17 may be diffused by the diffusion member 17 and then transmitted to the side surface of the light guide plate 122. Accordingly, light having an entirely uniform distribution may be incident to the side surface of the light guide plate 122, so that the generation of a bright area and a dark area in the light guide plate 122 can be further suppressed compared to the first exemplary embodiment described above.

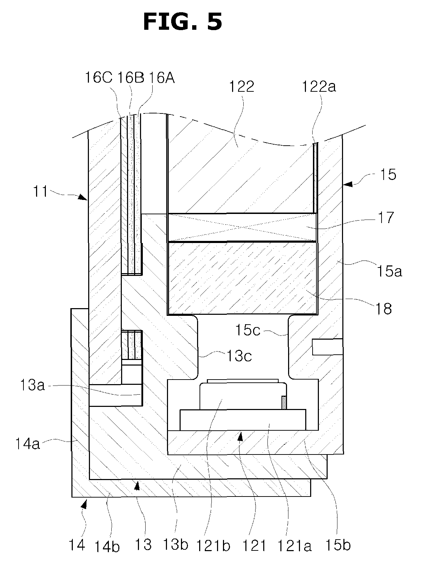

FIG. 5 is a cross-sectional view of a display module according to a third exemplary embodiment.

Referring to FIG. 5, a display module 10 may include a display panel 11, a light guide plate 122, a middle mold 13, a bottom chassis 15, and a top chassis 14, which have the same shapes as the corresponding components descried above Also, a first guide member 13c may be provided in the middle mold 13, and a second guide member 15c may be provided in the bottom chassis 15, wherein the heights in up-down direction of the first and second guide members 13c and 15c may be relatively lower than those of the first and second guide members 13c and 15c of the second exemplary embodiment described above. Also, between the first and second guide members 13c and 15c and a side surface (that is, the lower side surface of the light guide plate 122 in FIG. 5) of the light guide plate 122, a diffusion member 17 for diffusing light, and a transparent member 18 made of a transparent material to transmit light may be disposed in order. Accordingly, the side surface of the light guide plate 122 may be supported indirectly by the diffusion member 17 and the transparent member 18.

Since light generated by the LEDs 121b is diffused in a fan shape and proceeds to the side surface of the light guide plate 122, no light may be transferred to the front and back corners of the side surface of the light guide plate 122 if the first and second guide members 13c and 15c directly support the side surface of the light guide plate 122, so that a dark area may be generated.

However, if the transparent member 18 and the diffusion member 17 are disposed between the first and second guide members 13c and 15c and the side surface of the light guide plate 122, a space through which the light generated by the LEDs 121b can be diffused in a fan shape can be ensured by the transparent member 18. Accordingly, light generated by the LEDs 121b may pass through the transparent member 18 to be diffused in a fan shape, and then be incident to the diffusion member 17. The light transferred to the diffusion member 17 may be again diffused by the diffusion member 17, and then transferred to the side surface of the light guide plate 122. Accordingly, light having an entirely uniform distribution may be incident to the side surface of the light guide plate 122, so that the generation of a bright area and a dark area in the light guide plate 122 can be further suppressed compared to the second exemplary embodiment described above.

In the first, second, and third embodiments described above, the light sources 121 may be respectively disposed below and above the light guide plate 122 to irradiate light toward the lower and upper side surfaces of the light guide plate 122. However, the light sources 121 may additionally or alternatively be respectively disposed to the left and right of the light guide plate 122 so as to supply light toward the left and right side surfaces of the light guide plate 122.

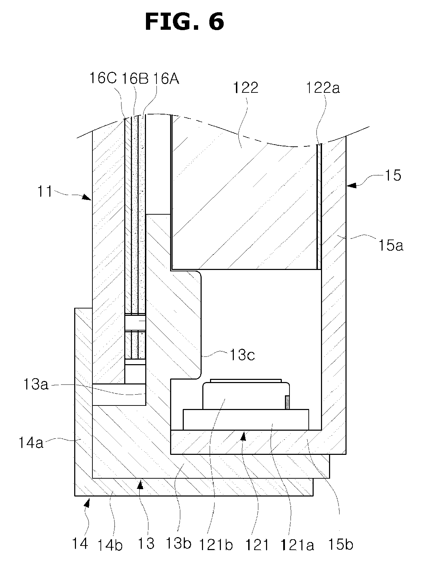

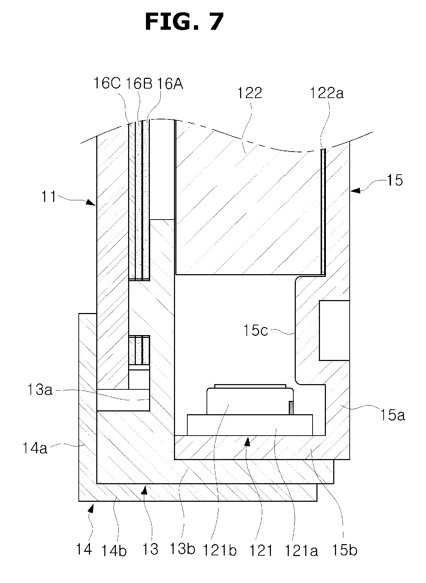

Also, in the exemplary embodiments described above, the guide members 13c and 15c may include the first guide member 13c provided in the middle mold 13 and the second guide member 15c provided in the bottom chassis 15. However, only the guide member 13c may be provided in the middle mold 13, as shown as a fourth exemplary embodiment in FIG. 6, or only the guide member 15c may be provided in the bottom chassis 15, as shown as a fifth exemplary embodiment in FIG. 7.

The method in which the guide member 13c or 15c is provided only in any one of the middle mold 13 and the bottom chassis 15, as described above, may be effective when the guide member 13c or 15c does not need to support the load of the light guide plate 122 since other guide members are disposed to support the left and right side surfaces of the light guide plate 122.

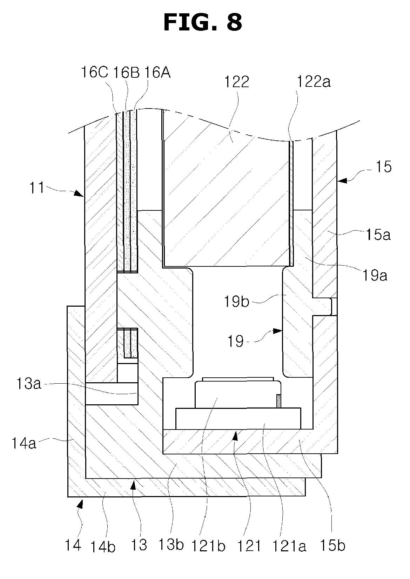

Also, in the first, second, and third exemplary embodiments described above, the second guide member 15c provided in the bottom chassis 15 may be formed by modifying a part of the bottom chassis 15. However, in a sixth embodiment shown in FIG. 8, a guide member 19 may be fabricated separately from the bottom chassis 15, and then installed in the bottom chassis 15.

In the sixth embodiment, the guide member 19 may include an installation part 19a disposed in parallel to the bottom rear part 15a forming the rear surface of the bottom chassis 15 and installed in the bottom rear part 15a, and a guide part 19b protruding from the installation part 19a in the front direction and supporting a side surface of the light guide plate 122.

As described above, since light supplied from the light sources is diffused through the diffusion member and then incident to the side surfaces of the light guide plate, it is possible to prevent the generation of a bright area and a dark area around the side surfaces of the light guide plate.

Although a few exemplary embodiments have been shown and described, it would be appreciated by those skilled in the art that changes may be made in these exemplary embodiments without departing from the principles and spirit of the disclosure, the scope of which is defined in the claims and their equivalents.

## Claims

1. A display apparatus comprising:
a display panel;
a light guide plate disposed behind the display panel;
at least one light source disposed to face at least one side surface of the light guide plate; and
at least one guide member disposed between the at least one side surface of the light guide plate and the at least one light source, the at least one guide member being configured to support at least one of a front part of the at least one side surface of the light guide plate and a back part of the at least one side surface of the light guide plate.

2. The display apparatus according to claim 1, wherein the at least one light source comprises a substrate, and a plurality of light emitting diodes (LEDs) arranged on the substrate to face the at least one side surface of the light guide plate, and
the guide member restrictively supports the LEDs and the at least one of the front part of the at least one side surface of the light guide plate and the back part of the at least one side surface of the light guide plate.

3. The display apparatus according to claim 1, further comprising:
a middle mold configured to support the display panel; and
a bottom chassis configured to accommodate the light guide plate therein,
wherein the at least one guide member is disposed in at least one of the middle mold and the bottom chassis.

4. The display apparatus according to claim 3, wherein the at least one guide member is integrated into the middle mold and protrudes from the middle mold.

5. The display apparatus according to claim 3, wherein the at least one guide member is formed by modifying a part of the bottom chassis.

6. The display apparatus according to claim 3, wherein the at least one guide member is formed as a separate component relative to the bottom chassis, and matingly engaged in the bottom chassis.

7. The display apparatus according to claim 6, wherein the at least one guide member comprises an installation part extending parallel to the bottom chassis, and a guide part protruding from the installation part and supporting the at least one side surface of the light guide plate.

8. The display apparatus according to claim 1, further comprising a diffusion member disposed between the at least one guide member and the at least one side surface of the light guide plate, the diffusion member being configured to diffuse light.

9. The display apparatus according to claim 8, further comprising a transparent member disposed between the at least one guide member and the diffusion member.

10. The display apparatus according to claim 1, further comprising:
a middle mold configured to support edges of the display panel; and
a bottom chassis configured to accommodate the light guide plate;
wherein the at least one light source comprises a plurality of Light Emitting Diodes (LEDs) disposed to face the at least one side surface of the light guide plate,
wherein the at least one guide member comprises:
a first guide member formed in the middle mold and disposed between the at least one side surface of the light guide plate and the plurality of LEDs, the first guide member being configured to support a front part of the at least one side surface of the light guide plate; and
a second guide member formed in the bottom chassis and disposed between the at least one side surface of the light guide plate and the plurality of LEDs, the second guide member being configured to support a back part of the at least one side surface of the light guide plate, and
wherein the first guide member is spaced from the second guide member, and faces the second guide member.

11. The display apparatus according to claim 10, further comprising a diffusion member disposed between the first guide member and the second guide member and the at least one side surface of the light guide plate.

12. The display apparatus according to claim 11, further comprising a transparent member disposed between the first guide member and the second guide member and the diffusion member.

13. The display apparatus according to claim 11, wherein the plurality of LEDs are aligned to face an upper side surface and a lower side surface of the light guide plate, and
a pair of first guide members and a pair of second guide members are provided to support the upper side surface and the lower side surface of the light guide plate.
